# DEMANDE DE BREVET EUROPEEN

(11) **EP 0 987 449 A1**
(43) Date de publication de la demande: **22.03.2000**
(21) Numéro de dépôt: 99402283.8
(22) Date de dépôt: 17.09.1999
(51) Int. Cl.: F16B 5/02, B62D 27/06

(54) **Agencement pour la fixation de deux élements strucurels d'un véhicule automobile**

(30) Priorité: 18.09.1998 FR 9811705
(71) Demandeur: RENAULT, 92109 Boulogne-Billancourt (FR)
(72) Inventeur: Sandford, Alain, 78110 Le Vesinet (FR)

(57) **Abrégé**

L'invention propose un agencement pour la fixation de deux éléments (10, 12) appartenant par exemple à la structure de caisse d'un véhicule automobile parmi lesquels un premier élément (10) comporte une entretoise tubulaire (14) qui est traversée par le corps (44, 47) d'une vis (46) dont l'extrémité libre filetée (47) s'étend axialement au-delà de l'entretoise pour être vissée dans un écrou (28, 30) porté par le second élément (12), caractérisé en ce que l'entretoise (14) est munie intérieurement d'une douille (34) de retenue de la vis (46) par rapport à l'entretoise (14) dans une position temporaire de montage avant vissage, qui comporte des moyens (48, 50) qui coopèrent par frottement avec la surface externe du tronçon de la tige (44) de la vis (46) qui est reçu axialement dans la douille (34) et qui sont susceptibles de se déformer élastiquement, lors du vissage, pour permettre un excentrement de la vis (46, Y-Y) par rapport à l'axe (X-X) de l'entretoise tubulaire (14).

## Description

La présente invention concerne un agencement pour la fixation de deux éléments appartenant par exemple à la structure de caisse d'un véhicule automobile.

L'invention concerne notamment la fixation au moyen d'une liaison du type vis-écrou de deux éléments structurels appartenant à la caisse d'un véhicule automobile tels que par exemple un longeron et une traverse, où tous autres éléments similaires appartenant généralement à des sous-ensembles préalablement fabriqués et finalement assemblés.

L'invention concerne plus particulièrement un agencement permettant de réaliser une telle fixation en automatique, par exemple au moyen d'une visseuse ou d'un robot de vissage, et ceci en toute fiabilité.

Dans le cas de la construction automobile, les deux éléments à assembler et à fixer ensemble comportent généralement un premier élément qui comporte une entretoise tubulaire qui est traversée par le corps d'une vis dont l'extrémité libre filetée s'étend axialement au-delà de l'entretoise pour être vissée dans un écrou porté par le second élément de l'assemblage.

Afin de permettre l'opération finale d'assemblage entre les deux éléments en automatique, il est nécessaire que le premier élément soit préalablement porteur de la vis d'assemblage de façon que la visseuse puisse venir directement entraîner la tête de la vis en rotation. Il est aussi nécessaire, compte tenu des tolérances dimensionnelles de fabrication des éléments à assembler, que l'agencement en vue de la fixation permette un excentrement de la vis par rapport à l'axe géométrique de l'entretoise tubulaire dans la mesure où l'axe de vissage réel est déterminé par l'axe géométrique du taraudage de l'écrou dans lequel est reçue l'extrémité libre filetée de la vis.

Dans ce but, l'invention propose un agencement du type mentionné précédemment, caractérisé en ce que l'entretoise est munie intérieurement d'une douille de retenue de la vis par rapport à l'entretoise, dans une position temporaire de montage avant vissage, qui comporte des moyens qui coopèrent par frottement avec la surface externe du tronçon de la tige de la vis qui est reçu axialement dans la douille et qui sont susceptibles de se déformer élastiquement, lors du vissage, pour permettre un excentrement de la vis par rapport à l'axe de l'entretoise tubulaire.

Selon d'autres caractéristiques et avantages de l'invention :
- la douille de retenue comporte une virole cylindrique extérieure, de dimension complémentaire de celle de l'entretoise, et une série d'ailettes intérieures dont chacune s'étend sensiblement radialement vers l'intérieur à partir de la virole et dont les bords internes, d'orientation axiale, coopèrent par frottement avec la surface externe du tronçon de la tige de la vis qui est reçu axialement dans la douille.
- les ailettes intérieures sont réparties angulairement de manière régulière autour de l'axe de la douille de retenue ;
- chacune des ailettes intérieures est susceptible de pivoter, par déformation élastique, autour de son bord externe, d'orientation axiale, par lequel elle est reliée à la virole extérieure de la douille pour permettre l'excentrement de la vis par rapport à l'axe de la douille, et donc par rapport à l'entretoise tubulaire ;
- la douille comporte au moins une partie déformée radialement vers l'intérieur qui s'étend dans la virole extérieure et dans au moins une ailette pour constituer une butée dans la douille (34) pour retenir transversalement la vis dans sa position temporaire de montage par rapport à l'entretoise ;
- la virole extérieure est fendue longitudinalement afin de pouvoir la comprimer élastiquement pour son montage à l'intérieur de l'entretoise tubulaire dans laquelle elle est montée comprimée sans jeu radial ;
- la douille de retenue est réalisée en une seule pièce par moulage en matière plastique ;
- la douille de retenue est symétrique par rapport à un plan axial de symétrie.

D'autres caractéristiques et avantages de l'invention apparaîtront à la lecture de la description détaillée qui va suivre, pour la compréhension de laquelle on sera portera aux dessins annexés dans lesquels :
- la figure 1 est une vue en section axiale, selon l'axe général de la liaison vis-écrou, qui illustre un exemple de réalisation d'un agencement conforme aux enseignements de l'invention et sur laquelle la vis est illustrée en position temporaire de montage ;
- la figure 2 est une vue similaire à celle de la figure 1 sur laquelle la vis est illustrée en position vissée et serrée ;
- la figure 3 est une vue en perspective éclatée, avec arrachement partiel, qui représente la douille de retenue conforme aux enseignements de l'invention en association avec la vis d'assemblage ;
- les figures 4 à 6 sont des vues schématiques en bout qui illustrent différents états de la douille de retenue en association avec la vis d'assemblage en position centrée à la figure 4 et en position excentrée à la figure 5, ou sans la vis d'assemblage à la figure 6 lors de sa mise en place dans l'entretoise.

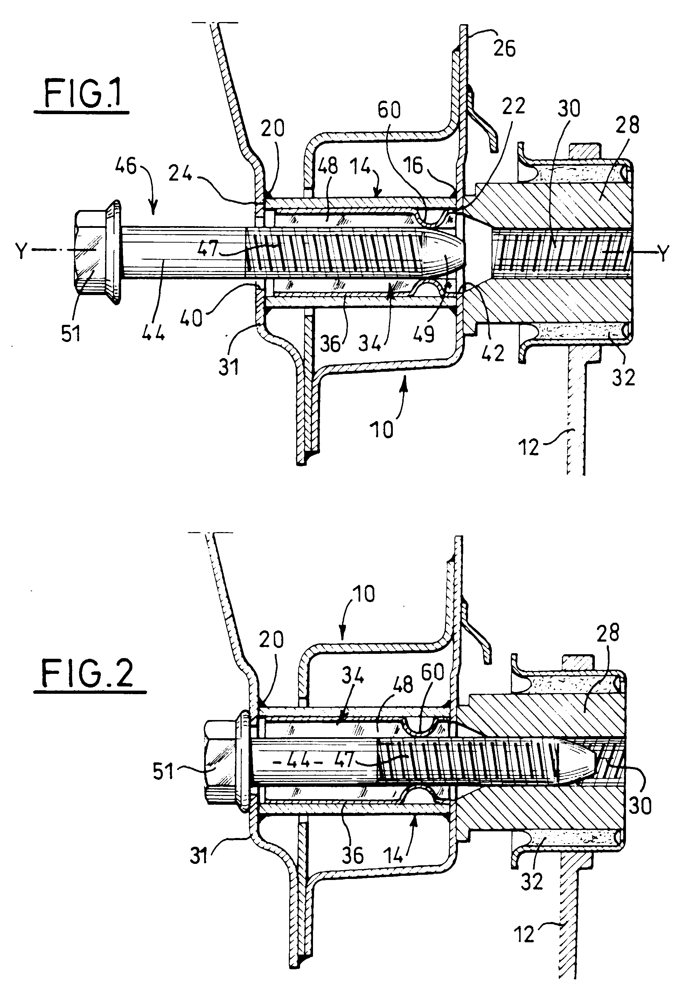

On a représenté aux figures 1 et 2 un assemblage de deux éléments structurels de la caisse d'un véhicule automobile comportant un longeron 10, de section générale rectangulaire, et une plaque verticale 12 appartenant par exemple à un berceau ou à une traverse.

Selon une conception générale connue, et afin de rigidifier le longeron pour éviter son écrasement transversal lors du serrage, il est prévue une entretoise tubulaire 14, qui est un tronçon de tube métallique, fixée dans le longeron 12, par exemple par une soudure 20 qui est réalisée à son extrémité axiale 24 pour la solidariser à une plaque verticale de tôle 31.

Ainsi, l'axe géométrique de l'entretoise 14 est fixe par rapport au longeron 10.

Le second élément 12 à assembler porte un écrou 28 qui comporte un taraudage 30, l'écrou 28 étant ici porté par la plaque 12 avec interposition d'un support élastique 32 pour l'absorption des vibrations.

Compte tenu des dispersions dimensionnelles des différents éléments résultant notamment de leur fabrication en mécano-soudure, l'axe géométrique Z-Z du taraudage 30 de l'écrou 28 n'est en général pas aligné avec l'axe géométrique X-X de l'entretoise 14.

Conformément aux enseignements de l'invention, l'agencement illustré aux figures 1 et 2 comporte une douille de retenue 34 qui équipe intérieurement l'entretoise 14.

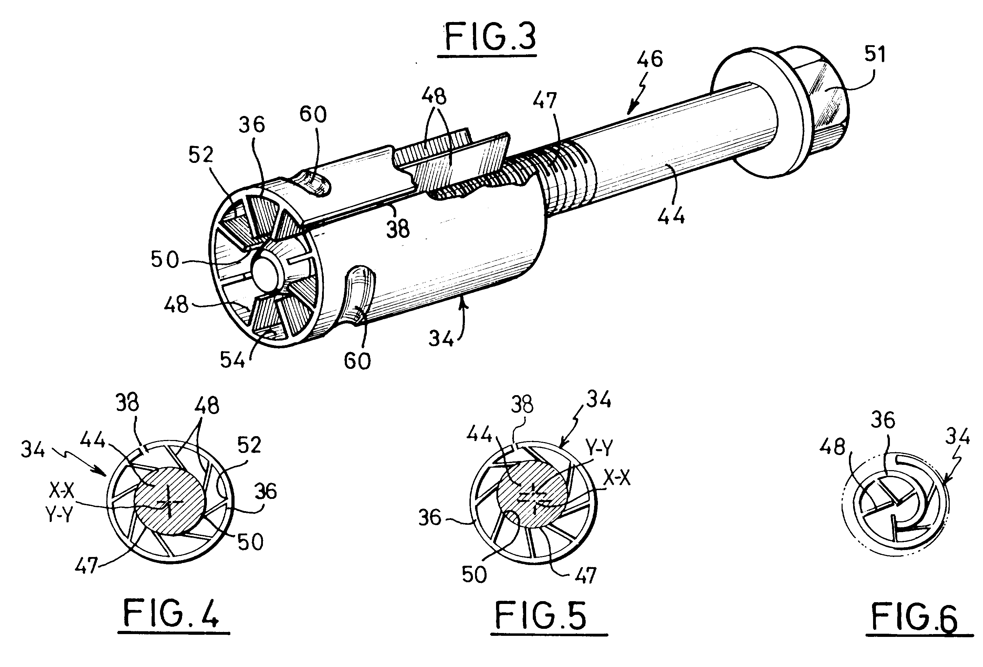

Comme on peut le voir plus particulièrement en détail à la figure 3, la douille 34 est une pièce moulée en matière plastique de forme générale cylindrique. Elle comporte une virole cylindrique 36 de faible épaisseur dont la longueur axiale est sensiblement égale, mais de préférence légèrement inférieure, à celle de l'entretoise 14 à l'intérieur de laquelle elle est montée.

La virole extérieure 36 et fendue, c'est-à-dire qu'elle comporte sur toute sa longueur une fente 38 qui s'étend ici dans le plan général axial de symétrie de la douille de retenue 36.

Les dimensions de la douille de retenue 34 à l'état libre, c'est-à-dire telle qu'elle est illustrée à la figure 3 et à la figure 5, sont telles qu'elle doit être comprimée radialement pour être introduite axialement à l'intérieur de l'entretoise 14, cette mise en place par introduction axiale pouvant être effectuée préalablement à la fixation par soudage de l'entretoise 14, ou après cette opération, en comprimant suffisamment la douille 34, par exemple comme cela est illustré à la figure 6, pour pouvoir l'introduire axialement d'arrière en avant, c'est-à-dire de la gauche vers la droite en considérant la figure 1, à travers le trou 40 qui est formé dans la tôle 31.

En position introduite à l'intérieur de l'entretoise 14, la virole 36 de la douille 34 est donc légèrement comprimée radialement à l'intérieur de l'entretoise 14 et elle est retenue axialement à l'intérieur de cette dernière d'une part par friction et, d'autre part, du fait des surfaces de butée que constituent les parties en vis-à-vis des tôles 30 et 26 qui délimitent les trous 40 et 42 formés respectivement dans les tôles 30 et 26 pour le passage du corps cylindrique 44 de la vis d'assemblage 46 dont l'extrémité avant 47 est filetée pour pouvoir être vissée dans le taraudage 30 de l'écrou 28.

Afin de retenir temporairement là vis 46 dans sa position d'assemblage illustrée à la figure 1, la douille de retenue 34 comporte une série d'ailettes intérieures 48 qui sont ici, à titre d'exemple non limitatif, au nombre de huit et qui sont réparties angulairement de manière régulière autour de l'axe de la douille de retenue 34, c'est-à-dire autour de l'axe de la virole extérieure 36 et de deux parties déformées 60 diaméltralement opposées qui ont pour fonction le positionnement de la vis 46 selon la direction transversale avant vissage, le bout de la vis ne devant pas sortir du longeron.

Dans l'exemple illustré sur les figures, chacune des ailettes intérieures 48 s'étend axialement sur toute la longueur de la virole extérieure 36.

Chaque ailette intérieure 48 est délimitée radialement vers l'intérieur par un bord axial interne 50 et, radialement vers l'extérieur, par un bord axial externe 52 par lequel chaque ailette 48 est reliée à la surface cylindrique interne 54 de la virole extérieure 36.

Le choix du matériau constitutif de la douille de retenue 34 et des dimensions et des épaisseurs de ses différentes parties, est tel que, outre la capacité évoquée précédemment pour la virole 36 d'être comprimée radialement, les ailettes 48 sont déformables élastiquement, c'est-à-dire qu'elles peuvent notamment pivoter dans les deux sens autour chacune de leur bord longitudinal externe 52 pour s'incliner, comme cela est illustré aux figures 4 et 5, afin de s'adapter au diamètre extérieur corps 44 de la vis 46 qui traverse la douille de retenue 34 et pour s'adapter aussi à l'excentrement de la vis 44 par rapport à l'axe géométrique X-X commun à l'entretoise 14 et à sa douille de retenue 34.

En l'absence d'une vis 46, les ailettes 48 s'étendent sensiblement radialement et la hauteur de chacune des ailettes 48, c'est-à-dire la distance radiale séparant les bords parallèles 50 et 52, est telle que le diamètre du cercle théorique passant par les bords internes 50 est inférieur au diamètre extérieur du corps 44 de la vis d'assemblage 46 prévue pour être introduite axialement dans la douille de retenue 34.

Ainsi, l'introduction du corps 44 de la vis d'assemblage 46 provoque la déformation élastique des ailettes intérieures 48 qui pivotent chacune dans le même sens, leurs bords internes 50 maintenant par frottement le corps 44 dans sa position illustrée à la figure 4 dans laquelle il est sensiblement coaxial à la virole extérieur 36, et donc à l'entretoise tubulaire 14.

L'invention n'est notamment pas limitée au mode de réalisation des déformations 60 illustré sur les figures, des parties ou zones correspondantes pouvant revêtir différentes formes sans sortir du cadre de l'invention.

Lors de l'opération de montage et de fixation de la traverse 10 sur la plaque 12, et après avoir préalablement mis la vis 46 en place dans sa position provisoire illustrée à figure 1, l'opération finale consiste à visser automatiquement la vis d'assemblage 46, par exemple au moyen d'une visseuse (non représentée sur les figures) pour provoquer tout d'abord l'engagement de l'extrémité libre avant 49, puis le vissage de la partie filetée 47 de la vis 46 dans le taraudage 30 de l'écrou 28.

Au cours de cette étape finale de vissage, et si l'axe Y-Y de la vis d'assemblage 46, qui dans sa position provisoire avant vissage correspond sensiblement à l'axe géométrique X-X commun à l'entretoise 14 et la douille de retenue 34, n'est pas aligné et/ou parallèle à l'axe Z-Z du taraudage 32 de l'écrou 28, les ailettes 48 de la douille de retenue 34 se déforment à nouveau par pivotement de manière que l'axe Y-Y de la vis d'assemblage 46, qui est alors confondu avec l'axe Z-Z du taraudage 30, soit excentré par rapport à l'axe Y-Y de la douille de retenue 34.

## Revendications

1. Agencement pour la fixation de deux éléments (10, 12) appartenant par exemple à la structure de caisse d'un véhicule automobile parmi lesquels un premier élément (10) comporte une entretoise tubulaire (14) qui est traversée par le corps (44, 47) d'une vis (46) dont l'extrémité libre filetée (47) s'étend axialement au-delà de l'entretoise pour être vissée dans un écrou (28, 30) porté par le second élément (12), caractérisé en ce que l'entretoise (14) est munie intérieurement d'une douille (34) de retenue de la vis (46) par rapport à l'entretoise (14) dans une position temporaire de montage avant vissage, qui comporte des moyens (48, 50) qui coopèrent par frottement avec la surface externe du tronçon de la tige (44) de la vis (46) qui est reçu axialement dans la douille (34) et qui sont susceptibles de se déformer élastiquement, lors du vissage, pour permettre un excentrement de la vis (46, Y-Y) par rapport à l'axe (X-X) de l'entretoise tubulaire (14).

2. Agencement selon la revendication précédente, caractérisé en ce que la douille de retenue (34) comporte une virole cylindrique extérieure (36), de dimension complémentaire de celle de l'entretoise (14), et une série d'ailettes intérieures (48) dont chacune s'étend sensiblement radialement vers l'intérieur à partir de la virole (36) et dont les bords internes (50), d'orientation axiale, coopèrent par frottement avec la surface externe du tronçon de la tige (44, 47) de la vis (46) qui est reçu axialement dans la douille (34).

3. Agencement selon la revendication précédente, caractérisé en ce que les ailettes intérieures (48) sont réparties angulairement de manière régulière autour de l'axe de la douille de retenue (34).

4. Agencement selon l'une quelconque des revendications 2 ou 3, caractérisé en ce que chacune des ailettes intérieures (48) est susceptible de pivoter, par déformation élastique, autour de son bord externe, d'orientation axiale, par lequel elle est reliée à la virole extérieure (36) de la douille (34) pour permettre l'excentrement de la vis (46) par rapport à l'axe de la douille (34), et donc par rapport à l'entretoise tubulaire (14).

5. Agencement selon l'une quelconque des revendications 2 à 4, caractérisé en ce que la douille (34) comporte au moins une partie (60) déformée radialement vers l'intérieur qui s'étend dans la virole extérieure et dans au moins une ailette (48) pour constituer une butée dans la douille (34) pour retenir transversalement la vis (46) dans sa position temporaire de montage par rapport à l'entretoise (14).

6. Agencement selon l'une quelconque des revendications 2 à 5, caractérisé en ce que la virole extérieure (36) est fendue longitudinalement afin de pouvoir la comprimer élastiquement pour son montage à l'intérieur de l'entretoise tubulaire (14) dans laquelle elle est montée comprimée sans jeu radial.

7. Agencement selon l'une quelconque des revendications précédentes, caractérisé en ce que la douille de retenue (34) est réalisée en une seule pièce par moulage en matière plastique.

8. Agencement selon l'une quelconque des revendications précédentes, caractérisé en ce que la douille de retenue (34) est symétrique par rapport à un plan axial de symétrie.
